# EUROPÄISCHE PATENTSCHRIFT

(11) **EP 1 181 166 B1**
(45) Veröffentlichungstag und Bekanntmachung des Hinweises auf die Patenterteilung: **08.10.2003**
(21) Anmeldenummer: 00909038.2
(22) Anmeldetag: 18.02.2000
(51) Int. Cl.: B60K 41/04, F16H 61/02

(54) **VERFAHREN ZUM ANSTEUERN EINES ANTRIEBSAGGREGATS IN EINEM ANTRIEBSSYSTEM, MIT VORGEBEN EINES PRÄDIKTIONSVERLAUFS FÜR EINE BETRIEBSGRÖSSE**
METHOD FOR CONTROLLING A DRIVE ASSEMBLY IN A DRIVE SYSTEM BY INPUTTING A PREDICTION PROCEDURE FOR AN OPERATIONAL PARAMETER
PROCEDE PERMETTANT DE COMMANDER UN ENSEMBLE D'ENTRAINEMENT D'UN SYSTEME D'ENTRAINEMENT SUR LA BASE D'UN DEROULEMENT PREDICTIF POUR UNE CERTAINE GRANDEUR DE FONCTIONNEMENT

(30) Priorität: 18.02.1999 DE 19906871
(43) Veröffentlichungstag der Anmeldung: 27.02.2002
(73) Patentinhaber: SIEMENS AKTIENGESELLSCHAFT, 80333 München (DE)
(72) Erfinder: GRAF, Friedrich, D-93049 Regensburg (DE); PROBST, Gregor, D-84028 Landshut (DE); GUTKNECHT-STÖHR, Florian, D-93047 Regensburg (DE); REUTHAL, Rainer, D-97294 Unterpleichfeld (DE); SCHNEIDER, Hans-Jürgen, D-97440 Stettbach (DE); CARL, Ingo, D-97469 Gochsheim (DE)
(86) Internationale Anmeldenummer: DE0000465
(87) Internationale Veröffentlichungsnummer: WO00048861

(56) Entgegenhaltungen:
- US-A- 5 036 728
- US-A- 5 403 245
- US-A- 5 573 477
- US-A- 5 658 217
- US-A- 5 816 976

## Beschreibung

Die vorliegende Erfindung betrifft ein Verfahren zum Ansteuern eines Antriebsaggregats in einem Antriebssystem, welches Antriebssystem ein automatisiertes Getriebe und eine das Antriebsaggregat mit dem Getriebe wahlweise zur Drehmomentübertragung koppelnde automatisierte Kupplung aufweist, sowie ein derartiges Antriebssystem.

Aus der EP 0 695 665 B1 ist ein derartiges Antriebssystem bekannt, bei welchem dem automatisierten Antriebsaggregat eine erste Ansteuervorrichtung zugeordnet ist und dem automatisierten Getriebe eine zweite Ansteuervorrichtung zugeordnet ist. Diese Ansteuervorrichtungen stehen in Datenaustausch, und bei Durchführung eines Schaltvorgangs wird durch die erste Ansteuervorrichtung das Antriebsaggregat derart angesteuert, daß das Drehmoment desselben von einen Ausgangswert auf einen Bereich von null vermindert wird. Während dieser Drehmomentverringerung sieht die Steuervorrichtung fur das automatisierte Getriebe jeweilige Sollwerte vor, die zur Steuervorrichtung des Antriebsaggregats übertragen werden und von dieser zur Ansteuerung des Antriebsaggregats derart genutzt werden, daß die Abweichung zwischen dem Istwert des Momentes und dem Sollwert auf einen minimalen Wert eingeregelt wird. Es wird bei dieser Prozedur jedoch nicht berücksichtigt, daß zum einen die Datenübertragung zwischen den beiden Ansteuervorrichtungen zu einer verzögerten Bereitstellung dieser Werte in der Ansteuervorrichtung für das Antriebsaggregat führt, und daß darüber hinaus die durch die Ansteuervorrichtung für das Antriebsaggregat vorgenommene Ansteuerung des Antriebsaggregats zum Einregeln eines bestimmten Istwertes ebenso mit einer bestimmten Verzögerung erfolgt, da insbesondere ein Eingriff in das Drosselsystem einer Brennkraftmaschine ein vergleichsweise träger Eingriff ist, dessen Reaktion mit bestimmter Verzögerung erfolgt. Dies führt dazu, daß bei diesem bekannten Verfahren bzw. diesem bekannten System eine relativ große Abweichung zwischen dem Ist-Drehmoment des Antriebsaggregats und dem durch die Ansteuervorrichtung für das automatisierte Getriebe vorgegebenen Sollwert vorhanden ist, mit der Folge, daß die gewünschte Schaltcharakteristik oftmals nicht erhalten werden kann.

Aus der DE 197 25 816 A1 ist ein Verfahren zum Ansteuern eines automatisierten Drehmomentübertragungssystems bekannt, bei welchem eine Ansteuereinheit das Antriebsaggregat anhand vorgegebener Sollwerte ansteuert, wobei während der Durchführung des Schaltvorgangs die Sollwerte jeweils unmittelbar aus dem Betriebszustand oder einem Kennfeld ermittelt werden. So werden beispielsweise als Sollwerte jeweilige umbestimmte Inkrement- oder Dekrement-Werte sich verändernde Werte des Drehmoments herangezogen, wobei die Inkrement- bzw. Dekrement-Werte von Größen, wie zum Beispiel dem Pedalwert, also dem Niederdrücken eines Gaspedals, dem Kupplungsschlupf und dergleichen abhängen. Da diese Sollwerte für das Motormoment in Abhängigkeit vom aktuellen Betriebszustand erzeugt werden, stehen sie nur relativ kurzfristig zur Verfügung, so daß zum Einregeln des Ist-Momentes auf die dann jeweils vorgegebenen Sollwerte eine bestimmte Zeit erforderlich ist mit der Folge, daß auch hier eine ungewünschte Verzögerung auftritt. Daraus ergibt sich, daß das Ist-Moment dem Soll-Moment mit einer bestimmten zeitlichen Verzögerung folgt und eine relativ große Abweichung vom Soll-Moment aufweist.

Aus der Druckschrift US-A-5 816 976 ist eine Steuerung eines Antriebsaggregats bekannt, bei dem das Motordrehmoment während eines Schaltvorgangs des Getriebes verringert wird. Dazu wird der Zündzeitpunkt zunächst um einen konstanten Wert verzögert. Bei Erreichen einer vorgegebenen Getriebeübersetzung wird ein optimaler Endzeitpunkt der Motorbeeinflussung bestimmt und der Wert der Zündverzögerung bis zum ermittelten Endzeitpunkt kontinuierlich bis auf Null abgesenkt.

Aus der DR 198 04 630 A1 ist eine Steuerungsvorrichtung für ein automatisches Getriebe bekannt. Diese weist einen Öldrucksteuerungsteil zur Steuerung des Eingriffsübergangsöldrucks auf, der Reibungseingriffselementen zugeführt wird, so daß die Turbinendrehzahl eines Drehmomentwandlers entlang einer Ortskurve eines Zielwerts geändert wird. Außerdem ist ein Motordrehmomentsteuerungsteil zur Steuerung einer Änderungsgröße des Motorausgangsdrehmoments, so dass die Turbinendrehzahl eines Drehmomentwandlers während einer drehzahlänedrung eine optimale Änderungscharakteristik aufweist.

Es ist die Aufgabe der vorliegenden Erfindung, ein Verfahren zum Ansteuern eines Antriebsaggregats bzw. ein Antriebssystem vorzusehen, mit welchem bei Durchführung eines Schaltvorgangs die Qualität der Motorführung verbessert werden kann.

Gemäß einem ersten Aspekt der vorliegenden Erfindung wird die eingangs genannte Aufgabe gelöst durch ein Verfahren zum Ansteuern eines Antriebsaggregats in einem Antriebssystem, welches Antriebssystem ein automatisiertes Getriebe und eine das Antriebsaggregat mit dem Getriebe wahlweise zur Drehmomentübertragung koppelnde automatisierte Kupplung aufweist, wobei das Verfahren die Schritte umfaßt:
a) Erfassen, ob eine Prozedur, insbesondere ein Schaltvorgang, durchgeführt werden soll,
b) nach Erfassen, daß eine Prozedur, insbesondere ein Schaltvorgang, durchgeführt werden soll, für wenigstens einen Zeitabschnitt der durchzuführenden Prozedur, Vorgeben eines Prädiktionsverlaufs für eine den Betriebszustand des Antriebsaggregats charakterisierende Betriebsgröße,
c) Ansteuern des Antriebsaggregats beruhend auf dem vorgegebenen Prädiktionsverlauf der Betriebsgröße derart, daß eine Abweichung zwischen der Betriebsgröße und dem Prädiktionsverlauf minimiert wird.

Bei der vorliegenden Erfindung wird dem Antriebssystem also ein bestimmter Prädiktionsverlauf der einzuregelnden Betriebsgröße vorgegeben, so daß bereits frühzeitig Maßnahmen ergriffen werden können, um zu bestimmten Zeitpunkten einen gewünschten Wert dieser Betriebsgröße erhalten zu können. Anhand dieses Prädiktionsverlaufs kann also eine Vorsteuerung vorgenommen werden, mit der Folge, daß die zum Beispiel während der Durchführung des Schaltvorgangs erhaltene Ist-Charakteristik der Betriebsgröße mit deutlich geringerer Abweichung vom Prädiktionsverlauf verläuft, als dies bei der Ist-Größe und der Soll-Größe des Stands der Technik der Fall ist. Eine derartige Vorgehensweise mit der Vorgabe eines bestimmten Prädiktionsverlaufs kann für verschiedenste Prozeduren eingesetzt werden, bevorzugterweise bei Durchführung eines Schaltvorgangs. Gleichwohl kann eine derartige Prozedur auch eine Beschleunigungsprozedur sein, bei welcher anhand der Vorgabe durch einen Fahrzeugfahrer eine relativ kurzfristige Änderung des Motordrehmoments erzielt werden soll.

Da während der Durchführung derartiger Prozeduren, insbesondere auch während der Durchführung von Schaltvorgängen, die Fahrzustände sich ändern können, beispielsweise weil der Fahrer während der Durchführung das Gaspedal oder ein Bremspedal betätigt, kann es vorkommen, daß der einmal für eine bestimmte Prozedur vorgegebene Prädiktionsverlauf für die aktuell vorliegenden Betriebscharakteristiken nicht mehr geeignet ist. Um derartige relativ kurzfristige Änderungen im Betriebszustand berücksichtigen zu können, wird vorgeschlagen, daß das Verfahren ferner folgende Schritte aufweist:
d) nach Erfassen, daß eine Prozedur, insbesondere ein Schaltvorgang, durchgeführt werden soll, Vorgeben wenigstens eines Sollwertes der Betriebsgröße,
e) dann, wenn der wenigstens eine Sollwert der Betriebsgröße von einem zugeordneten Prädiktionswert des Prädiktionsverlaufs abweicht, Ansteuern des Antriebsaggregats derart, daß eine Abweichung zwischen der Betriebsgröße und dem wenigstens einen Sollwert minimiert wird.

Bei dieser Vorgehensweise wird also zumindest dann, wenn erforderlich, ein zusätzlicher Sollwert, der anhand der möglicherweise vorhandenen Abweichung zu einem zugeordneten, also für einen gleichen Zeitpunkt bestimmten Prädiktionswert einen Korrekturterm definiert, dazu herangezogen, die Betriebsgröße in korrigierter Art und Weise einzustellen bzw. einzuregeln.

Hierzu kann beispielsweise vorgesehen sein, daß der Schritt e) umfaßt:
e₁) das Ansteuern eines ersten Stellbereichs des Antriebsaggregats beruhend auf dem Prädiktionsverlauf,
e₂) das Ansteuern eines zweiten Stellbereichs des Antriebsaggregats beruhend auf einer Abweichung zwischen dem wenigstens einen Sollwert und dem zugeordneten Prädiktionswert des Prädiktionsverlaufs.

Beispielsweise kann das Ansteuern des Antriebsaggregats beruhend auf dem Prädiktionsverlauf das Ansteuern eines dem als Brennkraftmaschine ausgebildeten Antriebsaggregat zugeordneten Lufteinlaßsystems umfassen.

Derartige Lufteinlaßsysteme weisen bei ihrer Ansteuerung eine relativ lange Einregelzeit auf, d.h. bedingt durch das Erfordernis, beispielsweise eine Drosselklappe zu verstellen, und bedingt durch die Tatsache, daß auch bei Schließen einer Drosselklappe in dem darauf folgenden Luftansaugrohr ein Luftvolumen vorhanden ist, besteht eine bestimmte zeitliche Verzögerung zwischen dem Ansteuern eines derartigen Lufteinlaßsystems und dem gewünschten Einregelverhalten, d.h. der Annäherung des Istwertes an den vorgegebenen Wert. Da jedoch gemäß dem erfindungsgemäßen Verfahren bereits längere Zeit vorher durch die Vorgabe des Prädiktionsverlaufes bekannt ist, welche Werte der Betriebsgröße zu bestimmten Zeiten erhalten werden sollen, kann zum Eliminieren der vorangehend besprochenen Probleme durch die Verzögerung bei Ansteuerung zum Beispiel eines Lufteinlaßsystems ferner vorgesehen sein, daß das Ansteuern des Antriebsaggregats beruhend auf dem Prädiktionsverlauf die folgenden Schritte umfaßt:
f) beruhend auf wenigstens einem Betriebsparameter, zum Beispiel Drehzahl, Drehmoment, Ansauglufttemperatur, Ansaugrohrvolumen, Ermitteln einer Reaktionszeit eines anzusteuernden Stellbereichs für einen bestimmten Ansteuerzeitpunkt,
g) beruhend auf der ermittelten Reaktionszeit für den bestimmten Ansteuerzeitpunkt Ermitteln eines Prädiktionswertes für einen Zeitpunkt, welcher um die ermittelte Reaktionszeit nach dem bestimmten Ansteuerzeitpunkt liegt, anhand des Prädiktionsverlaufes,
h) zu dem bestimmten Ansteuerzeitpunkt Ansteuern des Stellbereichs beruhend auf dem ermittelten Prädiktionswert.

Dies bedeutet, daß hier eine Vorsteuerung vorgenommen wird, d.h. zu einem aktuellen Zeitpunkt wird dem Lufteinlaßsystem eine für die Zukunft bestimmte Vorgabe gemacht, so daß zu einem späteren Zeitpunkt das Lufteinlaßsystem in einem anhand des Prädiktionsverlaufes für diesen späteren Zeitpunkt vorgegebenen Zustand ist.

Wie bereits vorangehend angesprochen, ist es möglich, daß während der Durchführung einer Prozedur von einem Prädiktionsverlauf abweichende korrigierende Sollwerte vorgegeben werden. Um kurzfristig derartige Korrekturgrößen noch berücksichtigen zu können, wird vorgeschlagen, daß der Schritt e₂) das Ansteuern eines dem als Brennkraftmaschine ausgebildeten Antriebsaggregat zugeordneten Zündsystems oder/und Einspritzsystems oder/und Ventilbetätigungssystems umfaßt. Das Ansteuern dieser verschiedenen Systeme bedeutet einen relativ schnellen Eingriff in das Antriebssystem, d.h. es wird eine im Vergleich zum Ansteuern des Lufteinlaßsystems vergleichsweise schnelle Reaktion bei der Änderung der Betriebsgröße erhalten.

Da diese Reaktion relativ schnell ist, d.h. ein vorgegebener Sollwert relativ schnell berücksichtigt werden kann, kann vorgesehen sein, daß der Schritt e) zu jedem bestimmten Ansteuerzeitpunkt das Ansteuern des Antriebsaggregats-beruhend auf einem dem bestimmten Ansteuerzeitpunkt zugeordneten Sollwert der Betriebsgröße umfaßt.

Es muß hier also nicht berücksichtigt werden, daß bestimmte Verzögerungen zwischen dem Ansteuern und der Reaktion vorliegen oder daß auch der Sollwert erst mit einer bestimmten Verzögerung vorliegt.

Bei dem erfindungsgemäßen Verfahren kann vorgesehen sein, daß der Prädiktionsverlauf in unveränderter Weise vorgegeben wird.

Ferner ist es möglich, daß die Prozedur, insbesondere der Schaltvorgang, in eine Mehrzahl von Phasen unterteilt wird und daß der Prädiktionsverlauf für noch nicht ansteuerrelevante Phasen veränderbar ist.

Der im erfindungsgemäßen Verfahren vorgegebene Prädiktionsverlauf kann wenigstens einen, vorzugsweise wenigstens zwei Prädiktions-Stützwerte für die Betriebsgröße umfassen; wenn mehrere Phasen vorgesehen sind, kann vorgesehen sein, daß für jede dieser Phasen der Prädiktionsverlauf wenigstens einen, vorzugsweise wenigstens zwei Prädiktions-Stützwerte umfaßt.

Die Genauigkeit der Motorführung kann weiter verbessert werden, wenn zusätzlich zu den den Prädiktionsverlauf definierenden Prädiktions-Stützwerten wenigstens einen, vorzugsweise eine Mehrzahl von durch Interpolation oder Extrapolation unter Miteinbeziehung des wenigstens einen Prädiktions-Stützwertes erhaltenen Prädiktions-Zusatzwerten vorgesehen wird.

Die Betriebsgröße, welche bei Durchführung der Prozedur auf einen bestimmten Verlauf eingestellt oder eingeregelt werden soll, kann das Drehmoment bzw. die Drehzahl des Antriebsaggregats sein. Insbesondere ist es möglich, daß dann, wenn die Prozedur in mehrere Phasen unterteilt ist, für wenigstens eine dieser Phasen die Betriebsgröße das Drehmoment ist und wenigstens eine weitere dieser Phasen die Betriebsgröße die Drehzahl ist.

Insbesondere dann, wenn die durchzuführende Prozedur ein Schaltvorgang ist, wird in allgemeinen zunächst das Drehmoment des Antriebsaggregats auf einen minimalen Wert gesenkt, wobei bei Annäherung oder Erreichen dieses minimalen Wertes ein Gang ausgelegt wird und nachfolgend ein neuer Gang eingelegt wird. Erfindungsgemäß ist bei einer gerartigen Prozedur vorzugsweise vorgesehen, daß nur in einer Phase, in welcher das Drehmoment des Antriebsaggregats den Bereich eines minimalen Wertes erreicht, die Betriebsgroße die Drehzal des Antriebsaggregats ist.

Auf diese Art und Weise ist es moglich, nach Auslegen eines vorher eingerichteten Ganges durch Drehzahlführung die Drehzahl des Antriebsaggregats auf einen gewünschten Wert zu bringen, welcher mit der nach Einlegen des neuen Ganges an der Getriebeeingangsseite vorliegengen Drehzahl übereinstimmt. Es läßt sich auf diese Art und Weise motorseitig bereits eine Synchronisation vornehmen, so daß beim nachfolgenden Einrückvorgang der Kupplung diese nur geringfugig beansprucht wird. Auch läßt sich bei nicht vollstandig ausgerückter Kupplung auf diese Art und Weise eine Synchronisation für das Getriebe vornehmen, da durch Drehzahlanpassung des Antriebsaggregats über die Kupplung auch die Getriebeeingangsseite auf eine dem neuen Gang entsprechende Drehzahl gebracht werden kann.

Bei dem erfindungsgemäßen Verfahren kann ferner vorgesehen sein, daß der Prädiktionsverlauf und gegebenenfalls der wenigstens eine Sollwert in einem dem automatisierten Getriebe zugeordneten Ansteuerbereich erzeugt werden und zu einem dem Antriebsaggregat zugeordneten Ansteuerbereich zur Ansteuerung des Antriebsaggregats übertragen werden.

Gemäß einem weiteren Aspekt wird die eingangs genannte Aufgabe gelöst durch ein Antriebssystem, insbesondere für ein Kraftfahrzeug, umfassend
ein Antriebsaggregat, ein automatisiertes Getriebe, eine wahlweise eine Drehmomentübertragungsverbindung zwischen dem Antriebsaggregat und dem automatisierten Getriebe herstellende automatisierte Kupplung, einen ersten Ansteuerbereich zum Ansteuern des Antriebsaggregats, einen zweiten Ansteuerbereich zum Ansteuern des automatisierten Getriebes und gegebenenfalls der automatisierten Kupplung.

Dabei ist vorgesehen, daß bei Durchführung einer Prozedur, insbesondere eines Schaltvorgangs, der zweite Ansteuerbereich für wenigstens einen Zeitabschnitt der durchzuführenden Prozedur einen Prädiktionsverlauf für eine den Betrieb des Antriebsaggregats charakterisierende Betriebsgröße vorgibt, und daß der erste Ansteuerbereich das Antriebsaggregat zum Einstellen der Betriebsgröße beruhend auf dem Prädiktionsverlauf ansteuert.

Dabei ist das Antriebssystem zum Berücksichtigen kurzfristiger Änderungen im Betriebszustand ferner derart ausgebildet, daß der zweite Anteuerbereich ferner während Durchführung der Prozedur, insbesondere des Schaltvorgangs, wenigstens einen Sollwert für die Betriebsgröße ermittelt und daß der erste Ansteuerbereich das Antriebsaggregat ferner beruhend auf dem wenigstens einen Sollwert ansteuert, wenn zwischen diesem und einem entsprechenden Prädiktionswert des Prädiktionsverlaufs eine Abweichung vorliegt.

Die vorliegende Erfindung wird nachfolgend mit Bezug auf die beiliegenden Zeichnungen anhand bevorzugter Ausgestaltungsformen beschrieben. Es zeigt:
Figur 1 eine schematische Darstellung eines Antriebssystems bei einem Kraftfahrzeug;
Figur 2 den prinzipiellen Verlauf des Drehmomentes eines Antriebsaggregats und der Ein- bzw. Ausrückstellung einer Kupplung während Durchführung eines Schaltvorgangs;
Figur 3 den zeitlichen Verlauf des Drehmomentes während Durchführung eines Schaltvorgangs;
Figur 4 den Verlauf eines die Durchführung eines Schaltvorgangs anzeigenden Signals;
Figur 5 ein verschiedene Phasen während Durchführung eines Schaltvorgangs anzeigendes Signal;
Figur 6 einen vergrößerten Abschnitt des in Figur 3 dargestellten Verlaufs des Drehmomentes in einer ersten Phase des Schaltvorgangs;
Figur 7 in vergrößerter Darstellung den Verlauf der Drehzahl in der dritten Phase des in Figur 3 dargestellten zeitlichen Verlaufs.

Die Figur 1 zeigt schematisch ein mit 10 bezeichnetes Antriebssystem eines Fahrzeugs. Das Antriebssystem umfaßt eine Brennkraftmaschine 12 als Antriebsaggregat, deren Kurbelwelle 14 mit einer Eingangsseite einer automatisierten Reibungskupplung 16 gekoppelt ist. Die Ausgangsseite der Reibungskupplung 16 steht in Drehverbindung mit einer Getriebeeingangswelle 18 eines automatisierten Schaltgetriebes 20. Eine Ausgangswelle 22 des Getriebes 20 treibt über ein Differential 24 Antriebswellen 26, 28 für angetriebene Räder 30, 32 an. Dem Antriebsaggregat, d.h. der Brennkraftmaschine 12, ist eine Steuervorrichtung 34 zugeordnet, die in nachfolgend beschriebener Art und Weise verschiedene Signale empfängt und beruhend auf diesen Signalen die Brennkraftmaschine 12 ansteuert. Dem automatisierten Getriebe 20 und der automatisierten Reibungskupplung 16 ist eine weitere Steuervorrichtung 36 zugeordnet, welche ebenfalls verschiedene Signale empfängt und beruhend auf diesen Signalen zum einen ein Kupplungsstellglied 38 ansteuert und zum anderen ein Getriebestellglied oder eine Getriebestellgliedanordnung 40 ansteuert. Ferner stehen die beiden Steuervorrichtungen 34, 36 in Informationsaustausch, wobei die Verbindung hier beispielsweise über einen CAN-Bus erfolgen kann.

Die Steuervorrichtung 34 für die Brennkraftmaschine 12 empfängt ein Drehzahlsignal von einem Drehzahlsensor 42, welches Signal die Drehzahl N der Brennkraftmaschine 12, beispielsweise der Kurbelwelle 14 der Brennkraftmaschine 12, wiedergibt. Ferner empfängt die Steuervorrichtung 34 ein Signal, welches die Betätigung eines Gaspedals 44 wiedergibt. Es sind im allgemeinen weitere allgemein mit 46 bezeichnete Sensoren vorgesehen, welche beispielsweise die Umgebungslufttemperatur, den Umgebungsluftdruck, die Kühlmitteltemperatur usw. erfassen und entsprechende Erfassungssignale in die Steuervorrichtung 34 eingeben. Beruhend auf diesen verschiedenen Informationen gibt die Steuervorrichtung 34 an verschiedene Stellbereiche, in der Figur schematisch mit 48, 54 angedeutet, Ansteuersignale aus, um entsprechend den Betrieb der Brennkraftmaschine 12 zu steuern. So ist der Stellbereich 48 beispielsweise ein Lufteinlaßsystem der Brennkraftmaschine 12, d.h. eine schematisch mit 50 angedeutete Drossel, die in einem Ansaugrohr 52 angeordnet ist, und durch ein entsprechendes Stellglied in ihrer Position veränderbar ist. Zwischen der Steuervorrichtung 34 und dem Lufteinlaßsystem 48 besteht ein beidseitiger Infcrmationsaustausch, d.h. gibt zum einen die Steuervorrichtung 34 an das Lufteinlaßsystem 48 Ansteuerbefehle aus, zum anderen gibt das Lufteinlaßsystem 48 an die Steuervorrichtung 34 Information über den momentanen Stellungszustand der Drossel 50 aus.

Der zweite Stellbereich 54 kennzeichnet allgemein Systeme, welche zur Beeinflussung des Betriebszustands des Motors weiterhin angesteuert werden können, also beispielsweise das Einspritzsystem in der Brennkraftmaschine 12, das Zündsystem, also die Zündkerzen der Brennkraftmaschine 12, und gegebenenfalls ein Ventilbetätigungssystem, über welches der Zeitpunkt des Öffnens und Schließens verschiedener Ventile angesteuert wird bzw. verschiedene Ventile aktiviert bzw. deaktiviert werden können. Auch dieser zweite Stellbereich 54 steht mit der Steuervorrichtung 34 in beidseitigem Informationsaustausch, d.h. es werden zum einen die Ansteuersignale zu diesem übertragen, zum anderen kann dieser Information in die Steuervorrichtung zurückspeisen, die den momentanen Zustand dieses Stellbereichs charakterisiert.

Die Steuervorrichtung 36 für das automatisierte Getriebe 20 bzw. die Reibungskupplung 16 empfängt von einem Betätigungssensor 56 Information darüber, ob und in welcher Art und Weise ein Ganghebel 58 betätigt worden ist. Beruhend auf dieser Information kann die Steuervorrichtung 36 erkennen, daß und in welchen Gang ein Fahrer zu schalten wünscht. Ferner kann die Steuervorrichtung 36 von einem Sensor 60 Information über die Drehzahl an der Getriebeausgangswelle 22 erhalten, was letztendlich Information über die momentane Fahrgeschwindigkeit ist. Hierzu könnte ebenso die Drehzahl der Antriebswellen 26, 28 erfaßt werden. Beruhend auf diesen Sensorsignalen und nachfolgend noch beschriebenen, der Steuervorrichtung 36 von der Steuervorrichtung 34 zugeführten Informationen steuert die Steuervorrichtung 36 die Stellglieder 38, 40 an, wenn ein Schaltvorgang durchgeführt werden soll.

Der zeitliche Ablauf eines derartigen Schaltvorgangs ist schematisch in Figur 2 dargestellt. Im oberen Teil der Figur 2 ist das Drehmoment M der Brennkraftmaschine 12 in relativer Auftragung dargestellt, im unteren Teil ist die Ausrückstellung K der Kupplung 16 dargestellt, wobei E den eingekuppelten Zustand repräsentiert, A den ausgekuppelten Zustand repräsentiert und S einen Zustand darstellt, in welchem die Drehmomentübertragung über die Kupplung hinweg unterbrochen wird.

Wird zu einem Zeitpunkt t₁ durch den Fahrer der Ganghebel 58 betätigt, so erfaßt dies die Steuervorrichtung 36, und beruhend auf der Art des durchzuführenden Schaltvorgangs wird, wie nachfolgend beschrieben, die Brennkraftmaschine 12 angesteuert, um das Drehmoment M derselben zum Auslegen und Einlegen der Gänge abzusenken. Dabei können, wie in Figur 2 durch den schattierten Bereich angedeutet, verschiedene Rampen durchlaufen werden, die je nach Betriebszustand und Art des durchzuführenden Schaltvorgangs ausgewählt werden. In entsprechender Weise wird bei Durchführung des Schaltvorgangs die Kupplung angesteuert, um, je nach für einen bestimmten Schaltvorgang geeigneter Rampe, die Kupplung in Übereinstimmung mit der Absenkung bzw. der Erhöhung des Drehmomentes M auszurücken bzw. einzurücken. Man erkennt dabei in Figur 2, daß der Schaltvorgang in fünf Phasen unterteilt ist, wobei die Phasen 1 und 2 im wesentlichen die Phasen der Verringerung des Motormomentes und zum Ausrücken der Kupplung darstellen, die Phase 3 eine Phase ist, in welcher das Motormoment bei einem minimalen Wert gehalten wird und das Auslegen eines zuvor eingerichteten Ganges und das Einlegen eines neuen Ganges vonstatten geht, und die Phasen 4 und 5 Phasen sind, in welchen das Motormoment wieder erhöht wird und die Kupplung wieder in Richtung zum vollständig eingerückten Zustand gesteuert wird.

Im folgenden wird mit Bezug auf die Figuren 3 bis 7 beschrieben, in welcher Art und Weise bei Durchführung eines Schaltvorgangs die Brennkraftmaschine 12 angesteuert wird, um eine gewünschte Führung des Betriebs derselben zu erhalten. Es sei zunächst wieder angenommen, daß zum Zeitpunkt t₁ der Fahrer durch Betätigung des Ganghebels 58 oder ein in einem Automatikmodus den Schaltvorgang auslösendes Steuergerät zu erkennen gibt, daß und in welchen Gang zu schalten ist. Beruhend auf verschiedenen den Betriebszustand des Systems kennzeichnenden Größen bestimmt dann die Steuervorrichtung 36 für diesen konkret durchzuführenden Schaltvorgang eine Mehrzahl von Prädiktions-Stützwerten P (in Figur 3), welche den gewünschten Verlauf des Motordrehmomentes M während Durchführung des Schaltvorgangs vorgeben. Zur Bestimmung dieser Prädiktionswerte P kann beispielsweise die Steuervorrichtung 36 auf ein Kennfeld zugreifen, in welchem die Abfolge der einen Schaltvorgang vorgebenden Prädiktionswerte P in Abhängigkeit verschiedener Größen, beispielsweise der Fahrgeschwindigkeit, der aus- bzw. einzulegenden Gangstufen und weiterer Größen, festgelegt ist. Zu diesem Zwecke wird, wie in Figur 1 angedeutet, der Steuervorrichtung 36 ferner eine Mehrzahl von Informationen übertragen, die beispielsweise das Motor-Ist-Moment Mᵢₛₜ umfassen, die Motor-Ist-Drehzahl Nᵢₛₜ, die Motortemperatur, also Kühlmitteltemperatur T, die Fahrpedalstellung FP, den Umgebungsdruck DR sowie das durch den Fahrer vorgegebene Wunschmoment, welches letztendlich durch die Pedalstellung FP definiert ist. Unter Miteinbeziehung all dieser Größen erzeugt also die Steuervorrichtung 36 die Abfolge von Prädiktions-Stützwerten P, d.h. wählt diese beispielsweise aus einem Kennfeld aus, und übertragt diese Prädiktions-Stützwerte P zur Steuervorrichtung 34. Die Steuervorrichtung 34 kann dann beruhend auf diesen Prädiktions-Stutzwerten P beispielsweise durch lineare Interpolation bzw. Extrapolation einen Prädiktionsverlauf M_{präd} für das Motormoment M ermitteln. D.h. für jeden Zeitpunkt des durchzuführengen Schaltvorgangs wird anhand des so ermittelten Prädiktionsverlautes M_{präd} ein vorgegebener Prädiktionswert bereitgestellt.

Wie man in Figur 3 ferner erkennt und wie bereits vorangehend mit Bezug auf die Figur 2 dargestellt, ist der durchzuführende Schaltvorgang in eine Mehrzahl von Phasen, nämlich die Phasen 1 bis 5 unterteilt. Dabei sind die Phasen 1 und 2 diejenigen Phasen, in welchen das Motormoment M auf einen Minimalwert heruntergeregelt wird, die Phasen 4 und 5 sind Phasen, in welchen nach Einlegen der neuen Gangstufe das Motormoment M wieder hochgeregelt wird, und die Phase 3 ist eine Phase, in welcher letztendlich das Auslegen der zuvor eingelegten Gangstufe und das Einlegen der neu eingelegten Gangstufe stattfindet. Wie nachfolgend mit Bezug auf die Figur 7 noch beschrieben, wird in der Phase 3 die Ansteuerung des Motors nicht zum Erhalt eines gewünschten Motormomentes sondern zum Erhalt einer gewünschten Drehzahl vorgenommen. D.h. für diese Phase 3 gibt die Steuervorrichtung 36 der Steuervorrichtung 34 einen Prädiktionsverlauf vor, der mehrere Prädiktions-Stützwerte zum Definieren eines vorgegebenen Drehzahlverlaufes N_{präd} charakterisiert. Letztendlich gibt also die Steuervorrichtung 36 für jede der Phasen 1 bis 5 jeweils eine Mehrzahl von Prädiktions-Stützwerten vor, wobei nicht notwendigerweise in allen Phasen die Prädiktions-Stützwerte für die gleiche Betriebsgröße, also das Motordrehmoment oder die Motordrehzahl vorgegeben sind, sondern zwischen verschiedenen Phasen kann die zu führende Betriebsgröße wechseln.

Im allgemeinen wird bei der Vorgabe der Prädiktions-Stützwerte so vorgegangen, daß zum Zeitpunkt t₁, also zu dem Zeitpunkt, zu dem die Durchführung eines Schaltvorgangs erfaßt wird, der vollständige Verlauf zwischen den Zeitpunkten t₁ und t₆ vorgegeben wird. Anhand dieser Vorgabe kann dann die Ansteuerung der Brennkraftmaschine 12 durch die Steuervorrichtung 34 vorgenommen werden. Es ist jedoch auch möglich, zur Anpassung an sich ändernde Betriebszustände jeweils nur diejenigen Prädiktions-Stützwerte P als fest vorgegeben zu nehmen, die in einer momentan ansteuerrelevanten Phase sind. D.h. unmittelbar nach dem Zeitpunkt t₁ während des Ablaufs der Phase 1 besteht immer noch die Möglichkeit, die Prädiktionswerte für die Phasen 2 bis 5 zu ändern. Nur die Prädiktionswerte für die Phase 1 bleiben vorgegeben. Wird der Endbereich der Phase 1 erreicht, so besteht die Möglichkeit, wie nachfolgend beschrieben, daß noch während der Phase 1 auch auf Prädiktionswerte der Phase 2 zugegriffen wird. In diesem Falle ist also bereits während der Phase 1 der Prädiktionsverlauf M_{präd} der Phase 2 ansteuerrelevant, so daß nunmehr auch der Prädiktionsverlauf, d.h. die Prädiktions-Stützwerte P, für diese Phase 2 als fest vorgegeben betrachtet werden. Es können dann nur noch die Prädiktions-Stützwerte P für die Phasen 3 bis 5 geändert werden. Um der Steuervorrichtung 34 anzuzeigen, daß eine bestimmte Prozedur, beispielsweise ein Schaltvorgang, durchzuführen ist, überträgt die Steuervorrichtung 36 ferner ein Eingriff-Aktiv-Signal EA, dessen Verlauf in Figur 4 dargestellt ist. Solange keine Prozedur durchzuführen ist, ist dieses Signal beispielsweise auf einem niederen Pegel; sobald erfaßt wird, daß ein Schaltvorgang durchzuführen ist, wechselt dieses Signal auf einen hohen Pegel, was der Steuervorrichtung 34 anzeigt, daß nunmehr eine Ansteuerung der Brennkraftmaschine 12 beruhend auf den von der Steuervorrichtung 36 übertragenen Größen vorzunehmen ist. Des weiteren wird von der Steuervorrichtung 36 ein den momentanen Eingriffsstatus repräsentierendes Eingriff-Status-Signal ES übertragen. Dieses Signal ES, dessen Verlauf in Figur 5 dargestellt ist, dient dazu, der Steuervorrichtung 34 anzuzeigen, welche Betriebsgröße der Brennkraftmaschine 12 auf eine bestimmte Charakteristik eingeregelt werden soll. So kann beispielsweise das Signal ES, das nur dann erzeugt wird, wenn das Signal EA auf einem hohen Niveau ist, dann, wenn die zu führende Betriebsgröße das Motormoment M ist, auf einem niederen Pegel sein, und dann, wenn die zu führende Größe die Motordrehzahl ist, auf einem hohen Pegel sein. Es sei ferner darauf hingewiesen, daß das Signal ES noch weiter untergliedert werden kann, um auch die verschiedenen Phasen 1, 2 bzw. 4, 5 zu kennzeichnen.

Hat also zum Zeitpunkt t₁ die Steuervorrichtung 36 erfaßt, daß ein Schaltvorgang durchzuführen ist und die Prädiktions-Stützwerte P für den durchzuführenden Schaltvorgang festgelegt und zusammen mit den Signalen EA und ES zur Steuervorrichtung 34 übertragen, so führt nunmehr die Steuervorrichtung 34 die Ansteuerung des Antriebsaggregats 12 beruhend auf diesen Prädiktions-Stützwerten P bzw. dem anhand dieser Prädiktions-Stützwerte P ermittelten Prädiktionsverlauf M_{präd} durch. Die Art und Weise, wie diese Ansteuerung vorgenommen wird, wird im folgenden insbesondere mit Bezug auf die Figur 6 beschrieben.

Nachdem die Steuervorrichtung 34 Information über den Prädiktionsverlauf M_{präd} vorliegen hat, wird sie zunächst im wesentlichen durch Ansteuerung des Lufteinlaßsystems 48 die Einregelung des Motormoments M auf den Prädiktionsverlauf M_{präd} vornehmen. Nun weist jedoch, wie eingangs bereits angesprochen, das Lufteinlaßsystem 48 ein verzögertes Ansprechverhalten auf. D.h. bei Ausgabe eines Ansteuerbefehls an das Lufteinlaßsystem 48 wird die gewünschte Reaktion sich erst mit einer bestimmten vom Betriebszustand abhängigen Verzögerung einstellen. Dies ist dadurch bedingt, daß die eine bestimmte Trägheit aufweisende Drossel 50 in Bewegung versetzt werden muß, und daß im Ansaugrohrbereich 52 auch bei sich schließender Drossel 50 immer noch Luftvolumen enthalten ist, das zunächst noch zur Verbrennung zur Verfügung steht. Die Steuervorrichtung 34 kann beispielsweise anhand eines Kennfelds aus verschiedenen den Betriebszustand des Systems kennzeichnenden Größen eine für einen bestimmten Zeitpunkt zu erwartende Reaktionsverzögerung Ätᵥ des Lufteinlaßsystems 48 ermitteln. Diese verschiedenen Betriebsgrößen können beispielsweise die Temperatur der Ansaugluft sein, die Drehzahl der Brennkraftmaschine, das Drehmoment der Brennkraftmaschine und das bekannte Volumen des Ansaugrohrs sein. Hat die Steuervorrichtung 34 diese Verzögerung Ätᵥ ermittelt, so kann sie, beruhend auf dieser bekannten Reakationsverzögerung, nunmehr eine Vorsteuerung durchführen, die in Figur 6 verdeutlicht ist. Es sei zum Beispiel angenommen, daß zum Zeitpunkt t_{C1} die Steuervorrichtung 34 einen Ansteuerbefehl an das Lufteinlaßsystem 48 ausgeben soll. Es wird dann, so wie vorangehend beschrieben, zum Zeitpunkt t_{C1} eine für diesen Zeitpunkt, also unter Einbeziehung der zu diesem Zeitpunkt vorliegenden Betriebszustände, zu erwartende Reaktionsverzögerung Ät_{V1} vermittelt. Ist für den Zeitpunkt t_{C1} diese Reaktionsverzogerung Ät_{V1} ermittelt, so kann zu diesem Zeitpunkt t_{C1} anhand des Prädiktionsverlaufs M_{präd} festgelegt werden, welcher Prädiktionswert des Prädiktionsverlaufs M_{präd} zu einem Zeitpunkt, der um diese Verzögerungszeit Ät_{V1} nach dem momentanen Ansteuerzeitpunkt t_{C1} liegt, vorgegeben ist. Im dargestellten Beispiel ist dies zum Zeitpunkt t_{P1} der Prädiktions-Stützwert P1. Dieser zum Zeitpunkt t_{C1} anhand der Verzögerung Ät_{V1} ermittelte, für den Zeitpunkt t_{P1} anzuwendende Prädiktionswert P1 bildet nunmehr den zum Ansteuerzeitpunkt t_{C1} heranzuziehenden Prädiktionswert, d.h. zum Zeitpunkt t_{C1} wird die Steuervorrichtung 34 das Lufteinlaßsystem 48 unter Verwendung des Prädiktionswertes P1 ansteuern. Die Folge ist, daß aufgrund der dann im Lufteinlaßsystem auftretenden Verzögerung zum Zeitpunkt t_{P1} mit relativ großer Genauigkeit eine Einregelung des Systems auf den Prädiktionswert P1 vorgenommen ist. Dieser Vorgang wird für alle durch den Arbeitstakt der Steuervorrichtung 34 vorgegebenen Ansteuerzeitpunkte durchgeführt, wie in Figur 6 auch anhand der Zeitpunkte t_{Ci} und t_{Pi} verdeutlicht. Es läßt sich somit ein Regelverhalten erzielen, bei welchem zu jedem Ansteuerzeitpunkt die aktuell zu erwartende Regelverzögerung des Lufteinlaßsystems berücksichtigt ist. Die zwischen einem dann anzuwendenden Prädiktionswert und dem Istwert Mᵢₛₜ zu erwartende Abweichung kann dadurch deutlich verkleinert werden. Nähert sich das Ende einer Phase, also in Figur 6 der Zeitpunkt t₂, so wird aufgrund des beschriebenen Vorsteuerverhaltens noch während der Phase 1 auf den für die Phase 2 vorgegebenen Prädiktionsverlauf M_{präd} zugegriffen. Dies bedeutet, daß spätestens ab einem derartigen Zeitpunkt, zu dem zum ersten Mal auf den Prädiktionsverlauf M_{präd} einer anderen Phase zugegriffen wird, auch für diese andere Phase der Prädiktionsverlauf M_{präd} feststehen muß.

Der Vorteil dieses Ansteuerverhaltens ist, daß die Führung des Motormomentes als Betriebsgröße, beruhend auf der Ansteuerung des Lufteinlaßsystems 48 vorgenommen werden kann, mit der Folge, daß die bei der Verbrennung erzeugten Abgase einen möglichst geringen Anteil an umweltschädlichen Bestandteilen aufweisen. Würde ein derartiger Eingriff alleine beruhend auf einer Ansteuerung des zweiten Stellbereichs 34, also des Zündsystems oder beispielsweise der Einspritzanlage vorgenommen werden, so wäre der Anteil umweltschädlicher Bestandteile im Abgas nicht annehmbar. Es wird jedoch darauf hingewiesen, daß bei der mit Bezug auf die Figur 6 vorangehend beschriebenen Prozedur zum Ansteuern des Lufteinlaßsystems 48 gleichwohl gleichzeitig eine Einwirkung auf den weiteren Stellbereich 54 vorgenommen werden kann, um für jeden Prädiktionswert des Prädiktionsverlaufs nicht nur die optimale Stellung im Lufteinlaßsystem zu erhalten, sondern dieser Stellung des Lufteinlaßsystems zugeordnet jeweils auch die optimale Stellung im weiteren Stellbereich, also die optimale Einspritzmenge oder den optimalen Zundzeitpunkt zu erhalten. Auf diese Art und Weise kann die Schadstoffemission weiter vermindert werden.

Während Durchführung eines Schaltvorgangs ist es möglich, daß beispielsweise durch Veränderung der Gaspedalstellung eine Änderung des Betriebszustands auftritt. Ein geänderter Betriebszustand kann jedoch bedeuten, daß die am Beginn des Schaltvorgangs vorgegebenen PrädiktlonsStützwerte P und der daraus ermittelte Prädiktionsverlaur M_{präd} für die geänderten Betriebszustände nicht mehr optimal sind. Da jedoch zumindest für eine bereits ansteuerrelevante Phase eine Veränderung dieses Prädiktionsverlaufs bzw. der Pradiktions-Stützwerte nicht mehr möglich ist, ist gemäß der vorliegenden Erfindung weiterhin vorgesehen, daß zur Berücksichtigung derartiger sich ändernder Betriebszustände von der Steuervorrichtung 36 ferner während Durchführung der Prozedur, also des Schaltvorgangs, wenigstens ein Sollwert oder ein Soll-Verlauf Nₛₒₗₗ bzw. Mₛₒₗₗ für die Motordrehzahl bzw. das Motormoment an die Steuervorrichtung 34 übertragen wird. Diese Sollwerte können beispielsweise auch unter Berücksichtigung der von der Steuervorrichtung 34 zur Steuervorrichtung 36 übertragenen Daten ermittelt werden. Diese einen Sollverlauf Mₛₒₗₗ bzw. Nₛₒₗₗ repräsentierenden Werte werden nunmehr in der Steuervorrichtung 34 dazu benutzt, die anhand der vorangehend dargestellten Ansteuerprozedur des Lufteinlaßsystems 48 vorgenommene Einregelung des Istwertes Mᵢₛₜ bzw. Nᵢₛₜ zu korrigieren. Man erkennt beispielsweise in Figur 6 für die Phase 1, daß nahezu über die gesamte Phase 1 hinweg eine Abweichung zwischen dem Sollmoment Mₛₒₗₗ und dem Prädiktionsverlauf M_{präd} vorhanden ist. Dies ist insbesondere für den Zeitpunkt t_{P1} durch die Abweichung ÄM gekennzeichnet. Da die Steuervorrichtung 34 diese Sollwerte S jedoch erst während der Durchführung des Schaltvorgangs empfängt, kann sie diese Sollwerte S nicht bei der vorangehend beschriebenen Vorsteuerung berücksichtigen. Beispielsweise sei angenommen, daß zum Zeitpunkt t_{P1} die Steuervorrichtung 34 von der Steuervorrichtung 36 den Sollwert S1 empfängt. Die Steuervorrichtung 34 wird dann unmittelbar zu diesem Zeitpunkt t_{P1} den Sollwert S1 dazu heranziehen, eine Abweichung zwischen diesem Sollwert S1 und dem für diesen Zeitpunkt t_{P1} festgelegten Prädiktionswert P1 zu ermitteln. Beruhend auf dieser Abweichung wird die Steuervorrichtung 34 dann den sehr schnell reagierenden zweiten Stellbereich 54 ansteuern, um durch geeignete Einwirkung auf das Zündsystem oder/und das Einspritzsystem oder/und das Ventilbetätigungssystem in sehr kurzer Zeit die zum Zeitpunkt t_{P1} vorliegende Abweichung zwischen dem diesem Zeitpunkt zugeordneten Prädiktionswert P1 und dem diesem Zeitpunkt ebenfalls zugeordneten bzw. zu diesem Zeitpunkt in der Vorrichtung 34 empfangenen Sollwert S1 zu berücksichtigen. Dies bedeutet, daß zu diesem Zeitpunkt t_{P1} letztendlich eine Einregelung des Motormomentes M auf den Sollwert S1 vorgenommen wird. Wenn dies für alle Ansteuerzeitpunkte t_{Ci} vorgenommen wird, dann wird zum einen also erreicht, daß durch die Vorsteuerung anhand der Prädiktions-Stützwerte bzw. des Prädiktionsverlaufs bereits eine relativ gute Heranführung des Motor-Istmomentes an den Prädiktionsverlauf erzielt wird. Treten fahrzustandsbedingt Änderungen auf, so können diese spontan durch Einwirkung auf den relativ schnell reagierenden Stellbereich 54 der Brennkraftmaschine 12 berücksichtigt werden.

Dabei ist es auch vernachlässigbar, daß bei der Datenübertragung zwischen den beiden Steuervorrichtungen 34 und 36 eine bestimmte zeitliche Verzogerung auftreten wird. D.h., beispielsweise zum Zeitpunkt den empfangt die Steuervorrichtung 34 einen Sollwert S1, der von der Steuervorrichtung 36 bereits früher abgesandt werden ist, d.h. für einen in der Vergangenheit liegenden Zeitpunkt bestimmt worden ist. Da diese Verzögerung jedoch relativ gering ist, verwendet die Steuervorrichtung 34 zu jedem Ansteuerzeitpunkt den ihr zu diesem Zeitpunkt zugegangenen Sollwert als Korrekturgröße. Der durch diese Verzögerung bei der Datenubertragung auftretende Fehler ist vernachlässigbar, da der wesentliche Anteil der Führung des Motormomentes durch die Prädiktion vorweggenommen ist und die zu erwartenden Abweichungen der Sollwerte vom Prädiktionsverlauf relativ gering sind.

Bei Durchführung eines Schaltvorgangs wird im allgemeinen bereits während der Absenkung des Drenmomentes der Maschine und während des Ausrückvorgangs der Kupplung das Stellglied oder die Stellgliedanordnung 40 des Getriebes 20 angesteuert, um eine bestimmte Schaltkraft aufzubauen. Wird durch Senken des Motordrehmomentes der Antriebsstrang dann nahezu lastfrei, so wird ein Zustand erreicht, in dem die aufgebaute Schaltkraft und die dem Schaltvorgang entgegenwirkende Last des Antriebsstrangs sich ausgleichen, so daß zwangsweise dann der momentan eingerichtete Gang ausgelegt wird. Dies wird bei der Darstellung der Figuren 2 und 3 im Bereich des Beginns der Phase 3 bzw. des Endes der Phase 2 auftreten. Hat sich dann das Motormoment M seinem minimalen Wert im Bereich von null angenähert und ist die Kupplung ausgerückt oder nahezu vollständig ausgerückt, so kann der nächste Gang eingelegt werden. Dieses Einlegen des nächsten Ganges hat jedoch zur Folge, daß die Getriebeeingangswelle 18 sich definiert durch die Drehzahl der Getriebeausgangswelle 20 und das Übersetzungsverhältnis der neu eingelegten Gangstufe mit vorbestimmter Drehzahl drehen wird, die nicht notwendigerweise mit der Drehzahl der Brennkraftmaschine 12, d.h. der Kurbelwelle 14 derselben, übereinstimmt. Würde nachfolgend die Kupplung 16 eingerückt werden, so würde möglicherweise ein Schaltstoß auftreten, zumindest würde ein erheblicher Verschleiß in der Kupplung erzeugt werden. Zu diesem Zwecke kann gemäß der vorliegenden Erfindung vorgesehen sein, daß in derjenigen Phase des Schaltvorgangs, in welcher das Motordrehmoment M seinen minimalen Wert erreicht hat und möglicherweise kurzfristig näherungsweise konstant gehalten wird, die Führung der Brennkraftmaschine 12 nicht mehr anhand des Drehmomentes M vorgenommen wird, sondern anhand der Drehzahl N. Für die nachfolgenden Phasen 4 und 5 ist es nämlich von untergeordneter Bedeutung, welches Drehmoment die Brennkraftmaschine aufweist. Folglich kann durch die Auswahl der Drehzahl N als Führungsgröße in dieser Phase eine nennenswerte Änderung des Drehmomentes M auftreten. Von größerer Bedeutung ist, daß die Drehzahldifferenz zwischen Getriebeeingang und Kurbelwelle minimal ist. Zu diesem Zwecke wird, wie vorangehend beschrieben, in dieser Phase 3 der Prädiktionsverlauf anhand von Prädiktions-Stützwerten P für die Motordrehzahl N, d. h. eines in Fig. 7 dargestellten Prädiktionsverlaufes N_{präd} für die Motordrehzahl, vorgegeben. Die Steuervorrichtung 34 erkennt diesen Wechsel in der Führungsgröße anhand des Signals ES und führt nunmehr während der Phase 3 eine Drehzahlregelung durch. Diese Regelung findet genau so statt, wie vorangehend mit Bezug auf die Fig. 6 anhand des Drehmomentes beschrieben. Das heißt, es wird im wesentlichen das Lufteinlaßsystem 48 beruhend auf dem vorgegebenen Prädiktionsverlauf bzw. den einzelnen Prädiktionswerten angesteuert, um die gewünschte Drehzahl der Brennkraftmaschine 12 zu erhalten. Ändern sich die Betriebsbedingungen, so werden von der Steuervorrichtung 36 wieder einen Soll-Verlauf Nₛₒₗₗ charakterisierende Sollwerte S zur Vorrichtung 34 übertragen, so daß dann, wenn eine Abweichung ÄN zwischen den Prädiktionswerten bzw. dem Prädiktionsverlauf und den aktuell übertragenen Sollwerten vorliegt, wieder eine Korrektur durch geeignete Ansteuerung des Einspritzsystems bzw. des Ventilbetätigungssystems erfolgen kann. Auch bei der Auswahl der Drehzahl als zu führende Betriebsgröße kann insbesondere hinsichtlich des Lufteinlaßsystems 48 die vorangehend mit Bezug auf die Fig. 6 detailliert beschriebene Vorsteuerung bei der Auswahl der zu einem bestimmten Steuerzeitpunkt heranzuziehenden Prädiktionswerte vorgenommen werden. Auf diese Art und Weise kann während der Phase 3 die Drehzahl der Brennkraftmaschine 12 auf ein gewünschtes Niveau gebracht werden, welches mit dem an der Getriebeeingangswelle 18 zu erwartenden Drehzahlniveau der neuen Gangstufe übereinstimmt. Darüber hinaus könnte auf diese Art und Weise auch eine Synchronisation des Getriebes vorgenommen werden, nämlich dadurch, daß, wie in Fig. 2 angedeutet, in einer zweiten Hälfte der Phase 3 die Kupplung in einen Zustand gebracht wird, in welchem sie zumindest ein geringes Drehmoment übertragen kann. Wird dann während dieser Phase auch die Drehzahl der Brennkraftmaschine auf den an der Getriebeeingangsseite vorgegebenen Wert gebracht, so wird über die Kupplung 16 auch die Getriebeeingangswelle an diesen Wert herangeführt, so daß nach Beendigung der Phase 3, erzwungen durch die geeignete Ansteuerung der Brennkraftmaschine 12 und das geringfügige Einrücken der Kupplung 16, eine Synchronisation des Getriebes vorgenommen worden ist. Es kann dann nachfolgend der neue Gang eingelegt werden, wobei dieses Einlegen sehr schnell vorgenommen werden kann, da im Getriebe selbst keine Synchronisation mehr vorzunehmen ist.

Durch die vorliegende Erfindung ist ein Verfahren bzw. ein Antriebssystem vorgesehen, mit welchem insbesondere ein Schaltvorgang mit hoher Qualität, d. h. im wesentlichen ruckfrei und mit geringem Verschleiß im Bereich der Kupplung und des Getriebes, durchgeführt werden kann. Die Brennkraftmaschine kann durch die Vorgabe des Prädiktionsverlaufes und durch zusätzlich eingebrachte, aktuelle Betriebszustände berücksichtigende Korrekturen anhand der Sollwerte optimal für den jeweiligen Schaltvorgang geführt werden, wobei aufgrund der erhaltenen Ansteuercharakteristik dafür gesorgt wird, daß die Schadstoffemission während der gesamten Prozedur minimal gehalten wird. Es sei darauf hingewiesen, daß eine derartige Ansteuerung der Brennkraftmaschine nicht notwendigerweise nur während eines Gangschaltvorgangs vorgenommen wird. Auch während eines Beschleunigungs- oder Verzögerungsvorgangs kann eine derartige Ansteuerung vorgesehen werden, wobei dann nicht notwendigerweise die Prädiktions-Stützwerte und die Sollwerte von der Getriebesteuervorrichtung erzeugt werden, sondern beispielsweise auch in der Motorsteuervorrichtung 34 selbst erzeugt werden können, nämlich anhand der in diese eingegebenen, den Fahrzustand charakterisierenden Informationen.

Es sei ferner darauf hingewiesen, daß die Anzahl an Prädiktions-Stützwerten für die gesamte Prozedur beliebig ist. Je größer die Anzahl an Prädiktions-Stützwerten ist, desto genauer läßt sich der Prädiktionsverlauf sowohl beim Motordrehmoment als auch bei der Motordrehzahl an einen optimalen Verlauf anpassen. Bei Untergliederung in mehrere Phasen sollten für jede dieser Phasen mindestens zwei Prädiktions-Stützwerte vorgegeben sein, wobei diese, wie in den Fig. 3, 6 und 7 erkennbar, jeweils in einem Zwischenbereich der einzelnen Phasen liegen können, gleichwohl jedoch auch den Anfangs- und Endpunkt und ggf. einen Zwischenpunkt in dieser Phase definieren können. Auch für die Sollwerte kann in der Steuervorrichtung 34 vorgesehen sein, daß anhand bereits empfangener Sollwerte ein zu erwartender Soll-Verlauf durch Extrapolation ermittelt wird, so daß beispielsweise dann, wenn durch gestörte oder verzögerte Datenübertragung zu einem bestimmten Ansteuerzeitpunkt kein Sollwert vorliegt, ein in der Steuervorrichtung selbst definierter Sollwert als Korrekturgröße herangezogen werden kann.

Bei der Definition der Prädiktions-Stützwerte kann auch derart vorgegangen werden, daß diese angepaßt an den Arbeitstakt der Steuervorrichtung 34 erzeugt werden. Das heißt, für jeden Arbeitszyklus der Steuervorrichtung 34, welcher letztendlich einen Ansteuerzeitpunkt repräsentiert, kann ein Prädiktions-Stützwert vorgegeben werden, so daß in der Steuervorrichtung 34 der Vorgang des Ermittelns oder Definierens verschiedener Prädiktions-Zwischenwerte durch Interpolation oder Extrapolation nicht erforderlich ist.

Insofern als im vorliegenden Text von Ansteuerzeitpunkten die Rede ist, ist es selbstverständlich, daß diese auch minimale Zeitbereiche um einen bestimmten Zeitpunkt umfassen, die erforderlich sind, um die für einen bestimmten Zeitpunkt vorgesehenen Vorgänge des Ermittelns verschiedener Größen und des Ausgebens verschiedener Ansteuersignale durchführen zu können.

Die vorangehend beschriebene Prozedur ist eine Prozedur, wie sie insbesondere in Verbindung mit einer Otto-Brennkraftmaschine angewandt wird. Bei derartigen Brennkraftmaschinen sind bekanntermaßen das Lufteinlaßsystem einerseits und der Einspritz- bzw. Zündbereich andererseits langsam bzw. schnell reagierende Stellbereiche der Brennkraftmaschine. Stellen sich konstruktionsbedingt bei Antriebsaggregaten anderen Typs andere Verhältnisse ein, d.h. sind von den vorangehend beschriebenen Stellbereichen andere Stellbereiche als schnell reagierende bzw. als langsam reagierende Stellbereiche zu betrachten, so ist es selbstverständlich, daß gemäß der Lehre der vorliegenden Erfindung die beschriebene Vorsteuerung durch Einwirkung auf die langsam reagierenden Stellbereiche vorgenommen werden kann und der korrigierende Eingriff durch Eingriff in die schnell reagierenden Stellbereiche vorgenommen werden kann.

## Patentansprüche

1. Verfahren zum Ansteuern eines Antriebsaggregats (12) in einem Antriebssystem, welches Antriebssystem (10) ein automatisiertes Getriebe (20) und eine das Antriebsaggregat (12) mit dem Getriebe (20) wahlweise zur Drehmomentübertragung koppelnde automatisierte Kupplung (16) aufweist, wobei das Verfahren die Schritte umfaßt:
a) Erfassen, ob eine Prozedur, insbesondere ein Schaltvorgang, durchgeführt werden soll,
b) nach Erfassen, daß eine Prozedur, insbesondere ein Schaltvorgang, durchgeführt werden soll, für wenigstens einen Zeitabschnitt (t₁-t₆) der durchzuführenden Prozedur, Vorgeben eines Prädiktionsverlaufs (M_{präd}, N_{präd}) für eine den Betriebszustand des Antriebsaggregats (12) charakterisierende Betriebsgröße (M, N),
c) Ansteuern des Antriebsaggregats (12) beruhend auf dem vorgegebenen Prädiktionsverlauf (M_{präd}, N_{präd})) der Betriebsgröße (12) derart, daß eine Abweichung zwischen der Betriebsgröße (M, N) und dem Prädiktionsverlauf (M_{präd},N_{präd}) minimiert wird.

2. Verfahren nach Anspruch 1, **dadurch gekennzeichnet, daß** das Verfahren ferner folgende Schritte aufweist:
d) nach Erfassen, daß eine Prozedur, insbesondere ein Schaltvorgang, durchgeführt werden soll, Vorgeben wenigstens eines Sollwertes der Betriebsgröße (M, N),
e) dann, wenn der wenigstens eine Sollwert S der Betriebsgröße (M, N) von einem zugeordneten Prädiktionswert des Prädiktionsverlaufs (M_{präd}, N_{präd}) abweicht, Ansteuern des Antriebsaggregats (12) derart, daß eine Abweichung zwischen der Betriebsgröße (M, N) und dem wenigstens einen Sollwert S minimiert wird.

3. Verfahren nach Anspruch 2, **dadurch gekennzeichnet, daß** der Schritt e) umfaßt:
e₁) das Ansteuern eines ersten Stellbereichs (48) des Antriebsaggregats beruhend auf dem Prädiktionsverlauf (M_{präd,} N_{präd}),
e₂) das Ansteuern eines zweiten Stellbereichs (54) des Antriebsaggregats beruhend auf einer Abweichung (ÄM, ÄN) zwischen dem wenigstens einen Sollwert (S) und dem zugeordneten Prädiktionswert des Prädiktionsverlaufs (M_{präd},N_{präd}).

4. Verfahren nach einem der Anspruche 1-3, **dadurch gekennzeichnet, daß** das Ansteuern des Antriebsaggregats (12) beruhend auf dem Prädiktionsverlauf (M_{präd}, N_{präd}) das Ansteuern eines dem als Brennkraftmaschine ausgebildeten Antriebsaggregat (12) zugeordneten Lufteinlaßsystems (48) umfaßt.

5. Verfahren nach einem der Anspruche 1-4, **dadurch gekennzeichnet, daß** das Ansteuern des Antriebsaggregats beruhend auf dem Prädiktionsverlauf die folgenden Schritte umfaßt:
f) beruhend auf wenigstens einen Betriebsparameter, zum Beispiel Drehzahl, Drehmoment, Ansauglufttemperatur, Ansaugrohrvolumen, Ermitteln einer Reaktionszeit (Ätᵥ) eines anzusteuernden Stellbereichs (48) fur einen bestimmten Ansteuerzeitpunkt (t_{c}),
g) beruhend auf der ermittelten Reaktionszeit (Ätᵥ) für den bestimmten Ansteuerzeitpunkt (t_{c}) Ermitteln eines Prädiktionswertes für einen Zeitpunkt, welcher um die ermittelte Reaktionszeit (Ätᵥ) nach dem bestimmten Ansteuerzeitpunkt (t_{c}) liegt, anhand des Prädiktionsverlaufes (M_{präd}, N_{präd}),
h) zu dem bestimmten Ansteuerzeitpunkt (t_{c}) Ansteuern des Stellbereiches (48) beruhend auf dem ermittelten Prädiktionswert.

6. Verfahren nach Anspruch 3 oder einem der Ansprüche 4-5, sofern auf Anspruch 3 rückbezogen, **dadurch gekennzeichnet, daß** der Schritt e₂) das Ansteuern eines dem als Brennkraftmaschine ausgebildeten Antriebsaggregat (12) zugeordneten Zündsystems oder/und Einspritzsystems oder/und Ventilbetätigungssystems umfaßt.

7. Verfahren nach Anspruch 2 oder einem der Ansprüche 4-6, sofern auf Anspruch 2 rückbezogen, **dadurch gekennzeichnet, daß** der Schritt e) zu jedem bestimmten Ansteuerzeitpunkt (t_{c}) das Ansteuern des Antriebsaggregats (12) beruhend auf einem dem bestimmten Ansteuerzeitpunkt zugeordneten Sollwert (S) der Betriebsgröße (M, N) umfaßt.

8. Verfahren nach einem der Ansprüche 1-7, **dadurch gekennzeichnet, daß** der Prädiktionsverlauf (M_{präd}, N_{präd}) in unveränderbarer Weise vorgegeben wird.

9. Verfahren nach einem der Ansprüche 1-8, **dadurch gekennzeichnet, daß** die Prozedur, insbesondere der Schaltvorgang, in eine Mehrzahl von Phasen unterteilt wird und daß der Prädiktionsverlauf (M_{präd},N_{präd}) für noch nicht ansteuerrelevante Phasen veränderbar ist.

10. Verfahren nach einem der Ansprüche 1-9, **dadurch gekennzeichnet, daß** der Prädiktionsverlauf (M_{präd},N_{präd}) wenigstens einen, vorzugsweise wenigstens zwei Prädiktions-Stützwerte (P) für die Betriebsgröße (M, N) umfaßt.

11. Verfahren nach Anspruch 9 oder 10, **dadurch gekennzeichnet, daß** der Prädiktionsverlauf (M_{präd},N_{präd}) wenigstens einen, vorzugsweise wenigstens zwei Prädiktions-Stützwerte (P) für jede Phase umfaßt.

12. Verfahren nach Anspruch 10 oder 11, **dadurch gekennzeichnet, daß** der Prädiktionsverlauf (M_{präd}, N_{präd}) wenigstens einen, vorzugsweise eine Mehrzahl von durch Interpolation oder Extrapolation unter Miteinbeziehung des wenigstens einen Prädiktions-Stützwertes (P) erhaltenen Prädiktions-Zusatzwerten umfaßt.

13. Verfahren nach einem der Ansprüche 1-12, **dadurch gekennzeichnet, daß** die Betriebsgröße (M) das Drehmoment (M) des Antriebsaggregats (12) ist.

14. Verfahren nach einem der Ansprüche 1-13, **dadurch gekennzeichnet, daß** die Betriebsgröße (N) die Drehzahl (N) des Antriebsaggregats (12) ist.

15. Verfahren nach Anspruch 9 und Anspruch 14 und Anspruch 15, **dadurch gekennzeichnet, daß** für wenigstens eine der Phasen die Betriebsgröße (M) das Drehmoment (M) des Antriebsaggregats (12) ist und daß für wenigstens eine der Phasen die Betriebsgröße (N) die Drehzahl (N) des Antriebsaggregats (12) ist.

16. Verfahren nach Anspruch 15, **dadurch gekennzeichnet, daß** nur in einer Phase, in welcher das Drehmoment (M) des Antriebsaggregats (12) den Bereich eines minimalen Wertes erreicht, die Betriebsgröße (N) die Drehzahl (N) des Antriebsaggregats (12) ist.

17. Verfahren nach einem der Ansprüche 1-16, **dadurch gekennzeichnet, daß** der Prädiktionsverlauf (M_{präd},N_{präd}) und gegebenenfalls der wenigstens eine Sollwert (S) in einem dem automatisierten Getriebe (20) zugeordneten Ansteuerbereich (36) erzeugt werden und zu einem dem Antriebsaggregat (12) zugeordneten Ansteuerbereich (34) zur Ansteuerung des Antriebsaggregats (12) übertragen werden.

18. Antriebssystem, insbesondere für ein Kraftfahrzeug, umfassend
- ein Antriebsaggregat (12),
- ein automatisiertes Getriebe (20),
- eine wahlweise eine Drehmomentübertragungsverbindung zwischen dem Antriebsaggregat (12) und dem automatisierten Getriebe (20) herstellende automatisierte Kupplung (16),
- einen ersten Ansteuerbereich (34) zum Ansteuern des Antriebsaggregats (12),
- einen zweiten Ansteuerbereich (36) zum Ansteuern des automatisierten Getriebes (20) und gegebenenfalls der automatisierten Kupplung (16),
**dadurch gekennzeichnet, daß** bei Durchführung einer Prozedur, insbesondere eines Schaltvorgangs, der zweite Ansteuerbereich (36) für wenigstens einen Zeitabschnitt (t₁-t₅) der durchzuführenden Prozedur einen Prädiktionsverlauf (M_{präd},N_{präd}) für eine den Betrieb des Antriebsaggregats (12) charakterisierende Betriebsgröße (M, N) vorgibt, und daß der erste Ansteuerbereich (34) das Antriebsaggregat (12) zum Einstellen der Betriebsgröße (M, N) beruhend auf dem Prädiktionsverlauf (M_{präd},N_{präd}) ansteuert, optional in Verbindung mit einem der Merkmale der Ansprüche 1-17.

19. Antriebssystem nach Anspruch 18, **dadurch gekennzeichnet, daß** der zweite Anteuerbereich (36) ferner während Durchführung der Prozedur, insbesondere des Schaltvorgangs, wenigstens einen Sollwert (S) für die Betriebsgröße (M, N) ermittelt und daß der erste Ansteuerbereich (34) das Antriebsaggregat (12) ferner beruhend auf dem wenigstens einen Sollwert (S) ansteuert, wenn zwischen diesem und einem entsprechenden Prädiktionswert des Prädiktionsverlaufs (M_{präd}, N_{präd}) eine Abweichung vorliegt.

## Claims

1. Method for controlling a drive assembly (12) in a drive system, said drive system (10) comprising an automatic transmission (20) and an automatic clutch (16) coupling the drive assembly (12) with the transmission (20) optionally for transmitting torque, the method comprising the steps:
a) register whether a procedure, particularly a gear change operation, is to be performed,
b) following registration that a procedure, particularly a gear change operation, is to be performed, for at least one time period (t₁-t₆) of the procedure to be performed, specify a prediction curve (M_{prad}, N_{prad}) for a performance variable (M, N) characterising the operating state of the drive assembly (12),
c) control the drive assembly (12) based on the specified prediction curve (M_{prad}, N_{prad}) of the performance variable (12), in such a way that a deviation between the performance variable (M, N) and the prediction curve (M_{prad}, N_{prad}) is minimised.

2. Method according to Claim 1, **characterised in that** the method additionally comprises the following steps:
d) after registering that a procedure, particularly a gear change operation, is to be performed, specify at least one setpoint value of the performance variable (M, N),
e) then, if the at least one setpoint value S of the performance variable (M, N) deviates from an assigned prediction value of the prediction curve (M_{prad}, N_{prad}), control the drive assembly (12) in such a way that a deviation between the performance variable (M, N) and the at least one setpoint value S is minimised.

3. Method according to Claim 2, **characterised in that** step e) comprises:
e₁) control a first range of adjustment (48) of the drive assembly based on the prediction curve (M_{prad}, N_{prad}),
e₂) control a second range of adjustment (54) of the drive assembly based on a deviation (ÄM, ÄN) between the at least one setpoint value (S) and the assigned prediction value of the prediction curve (M_{prad}, N_{prad}).

4. Method according to one of the Claims 1-3, **characterised in that** the control of the drive assembly (12) based on the prediction curve (M_{prad}, N_{prad}) comprises the control of an air intake system (48) assigned to the drive assembly (12) implemented as an internal combustion engine.

5. Method according to one of the Claims 1-4, **characterised in that** the control of the drive assembly based on the prediction curve comprises the following steps:
f) based on at least one operating parameter, for example speed, torque, intake air temperature, intake manifold volume, determine a reaction time (Ätᵥ) of a range of adjustment (48) to be controlled for a specific control time (t_{c}),
g) based on the determined reaction time (Ätᵥ) for the specific control time (t_{c}), determine a prediction value for a point in time which lies after the specific control time (t_{c}) by the determined reaction time (Ätᵥ) with reference to the prediction curve (M_{prad}, N_{prad}),
h) at the specific control time (t_{c}), control the range of adjustment (48) based on the determined prediction value.

6. Method according to Claim 3 or one of the Claims 4-5 insofar as referred back to Claim 3, **characterised in that** step e₂) comprises the control of an ignition system and/or injection system and/or valve actuation system assigned to the drive assembly (12) implemented as an internal combustion engine.

7. Method according to Claim 2 or one of the Claims 4-6 insofar as referred back to Claim 2, **characterised in that** step e) at any specific control time (t_{c}) comprises the control of the drive assembly (12) based on a setpoint value (S) of the performance variable (M, N) assigned to the specific control time.

8. Method according to one of the Claims 1-7, **characterised in that** the prediction curve (M_{prad}, N_{prad}) is specified in an unmodifiable way.

9. Method according to one of the Claims 1-8, **characterised in that** the procedure, particularly the gear change operation, is subdivided into a plurality of phases and that the prediction curve (M_{prad}, N_{prad}) is modifiable for phases that are not yet relevant to control.

10. Method according to one of the Claims 1-9, **characterised in that** the prediction curve (M_{prad}, N_{prad}) comprises at least one, preferably at least two, prediction sample values (P) for the performance variable (M, N).

11. Method according to Claim 9 or 10, **characterised in that** the prediction curve (M_{prad}, N_{prad}) comprises at least one, preferably at least two, prediction sample values (P) for each phase.

12. Method according to Claim 10 or 11, **characterised in that** the prediction curve (M_{prad}, N_{prad}) comprises at least one, preferably a plurality of, prediction supplementary values obtained by interpolation or extrapolation with the inclusion of the at least one prediction sample value (P).

13. Method according to one of the Claims 1-12, **characterised in that** the performance variable (M) is the torque (M) of the drive assembly (12).

14. Method according to one of the Claims 1-13, **characterised in that** the performance variable (N) is the speed (N) of the drive assembly (12).

15. Method according to Claim 9 and Claim 14 and Claim 15, **characterised in that** for at least one of the phases the performance variable (M) is the torque (M) of the drive assembly (12) and that for at least one of the phases the performance variable (N) is the speed (N) of the drive assembly (12).

16. Method according to Claim 15, **characterised in that** the performance variable (N) is the speed (N) of the drive assembly (12) only in one phase in which the torque (M) of the drive assembly (12) reaches the range of a minimum value.

17. Method according to one of the Claims 1-16, **characterised in that** the prediction curve (M_{prad}, N_{prad}) and if applicable the at least one setpoint value (S) are generated in a control range (36) assigned to the automatic transmission (20) and are transferred to a control range (34) assigned to the drive assembly (12) for controlling the drive assembly (12).

18. Drive system, particularly for a motor vehicle, comprising
- a drive assembly (12),
- an automatic transmission (20),
- an automatic clutch (16) optionally establishing a torque transmission connection between the drive assembly (12) and the automatic transmission (20),
- a first control range (34) for controlling the drive assembly (12),
- a second control range (36) for controlling the automatic transmission (20) and if applicable the automatic clutch (16),
**characterised in that** when a procedure, particularly a gear change operation, is performed the second control range (36) specifies a prediction curve (M_{prad}, N_{prad}) for a performance variable (M, N) characterising the operation of the drive assembly (12) for at least one time period (t₁-t₅) of the procedure to be performed, and that the first control range (34) controls the drive assembly (12) for setting the performance variable (M, N) based on the prediction curve (M_{prad}, N_{prad}), optionally in conjunction with one of the features of the Claims 1-17.

19. Drive system according to Claim 18, **characterised in that** the second control range (36) further determines during the execution of the procedure, particularly the gear change operation, at least one setpoint value (S) for the performance variable (M, N) and that the first control range (34) further controls the drive assembly (12) based on the at least one setpoint value (S) if there is a deviation between this and a corresponding prediction value of the prediction curve (M_{prad}, N_{prad}).

## Revendications

1. Procédé pour commander un groupe propulseur (12) dans un système propulseur, lequel système propulseur (10) présente une boîte de transmission automatisée (20) et un embrayage automatisé (16) qui accouple à volonté le groupe propulseur (12) avec la boite de transmission (20) en vue de transmettre un couple, le procédé présentant les étapes suivantes :
a) Détection de la nécessité d'exécuter une procédure, notamment un processus de changement de rapport,
b) Après la détection de la nécessité d'exécuter une procédure, notamment un processus de changement de rapport, pendant au moins un intervalle de temps (t₁ - t₆) de la procédure à exécuter, pré-attribution d'une évolution prévisionnelle (M_{prad}, N_{prad}) d'une grandeur opérationnelle (M, N) caractérisant l'état de fonctionnement du groupe propulseur (12),
c) Commande du groupe propulseur (12) en se basant sur l'évolution prévisionnelle (M_{prad}, N_{prad}) pré-attribuée de la grandeur opérationnelle (12) de manière à réduire un écart entre la grandeur opérationnelle (M, N) et l'évolution prévisionnelle (M_{prad}, N_{prad}).

2. Procédé selon la revendication 1, **caractérisé en ce que** le procédé présente également les étapes suivantes :
d) Après la détection de la nécessité d'exécuter une procédure, notamment un processus de changement de rapport, pré-attribution d'au moins une valeur de consigne de la grandeur opérationnelle (M, N),
e) Ensuite, lorsque l'au moins une valeur de consigne S de la grandeur opérationnelle (M, N) diverge d'une valeur prévisionnelle associée de l'évolution prévisionnelle (M_{prad}, N_{prad}), commande du groupe propulseur (12) de manière à réduire un écart entre la grandeur opérationnelle (M, N) et l'au moins une valeur de consigne S.

3. Procédé selon la revendication 2, **caractérisé en ce que** l'étape e) comprend :
e₁) La commande d'une première zone de réglage (48) du groupe propulseur en se basant sur l'évolution prévisionnelle (M_{prad}, N_{prad}),
e₂) La commande d'une deuxième zone de réglage (54) du groupe propulseur en se basant sur un écart (AM, AN) entre l'au moins une valeur de consigne (S) et la valeur prévisionnelle associée de l'évolution prévisionnelle (M_{prad}, N_{prad}).

4. Procédé selon l'une des revendications 1 à 3, **caractérisé en ce que** la commande du groupe propulseur (12) en se basant sur l'évolution prévisionnelle (M_{prad}, N_{prad}) comprend la commande d'un système d'admission d'air (48) associé au groupe propulseur (12) réalisé sous la forme d'un moteur à propulsion interne.

5. Procédé selon l'une des revendications 1 à 4, **caractérisé en ce que** la commande du groupe propulseur en se basant sur l'évolution prévisionnelle comprend les étapes suivantes :
f) En se basant sur au moins un paramètre de fonctionnement, par exemple la vitesse de rotation, le couple, la température de l'air aspiré, le volume du tube d'aspiration, détermination d'un temps de réaction (Atᵥ) d'une zone de réglage (48) à commande pour un moment de commande donné (t_{c}),
g) En se basant sur le temps de réaction (Atᵥ) déterminé pour le moment de commande donné (t_{c}), détermination d'une valeur prévisionnelle pour un moment qui est postérieur au moment de commande donné (t_{c}) d'une durée égale au temps de réaction (Atᵥ) déterminé à l'aide de l'évolution prévisionnelle (M_{prad}, N_{prad}),
h) Au moment de commande donné (t_{c}), commande de la zone de réglage (48) en se basant sur la valeur prévisionnelle déterminée.

6. Procédé selon la revendication 3 ou l'une des revendications 4 et 5 lorsqu'elles se rapportent à la revendication 3, **caractérisé en ce que** l'étape e₂) comprend la commande d'un système d'allumage et/ou d'un système d'injection et/ou d'un système d'actionnement de soupape associé au groupe propulseur (12) réalisé sous la forme d'un moteur à combustion interne.

7. Procédé selon la revendication 2 ou l'une des revendications 4 à 6 lorsqu'elles se rapportent à la revendication 2, **caractérisé en ce que** l'étape e) comprend, à chaque moment de commande donné (t_{c}), la commande du groupe propulseur (12) en se basant sur une valeur de consigne (S) de la grandeur opérationnelle (M, N) associée au moment de commande donné.

8. Procédé selon l'une des revendications 1 à 7, **caractérisé en ce que** l'évolution prévisionnelle (M_{prad}, N_{prad}) est pré-attribuée de manière inaliénable.

9. Procédé selon l'une des revendications 1 à 8, **caractérisé en ce que** la procédure, notamment le processus de changement de rapport, est divisée en une pluralité de phases et que l'évolution prévisionnelle (M_{prad}, N_{prad}) peut être modifiée pour les phases qui ne concernent pas encore la commande.

10. Procédé selon l'une des revendications 1 à 9, **caractérisé en ce que** l'évolution prévisionnelle (M_{prad}, N_{prad}) comprend au moins une, de préférence au moins deux valeurs de référence prévisionnelles (P) pour la grandeur opérationnelle (M, N).

11. Procédé selon la revendication 9 ou 10, **caractérisé en ce que** l'évolution prévisionnelle (M_{prad}, N_{prad}) comprend au moins une, de préférence au moins deux valeurs de référence prévisionnelles (P) pour chacune des phases.

12. Procédé selon la revendication 10 ou 11, **caractérisé en ce que** l'évolution prévisionnelle (M_{prad}, N_{prad}) comprend au moins une, de préférence une pluralité de valeurs prévisionnelles supplémentaires par interpolation ou extrapolation en intégrant l'au moins une valeur de référence prévisionnelle (P).

13. Procédé selon l'une des revendications 1 à 12, **caractérisé en ce que** la grandeur opérationnelle (M) est le couple (M) du groupe propulseur (12).

14. Procédé selon l'une des revendications 1 à 13, **caractérisé en ce que** la grandeur opérationnelle (N) est la vitesse de rotation (N) du groupe propulseur (12).

15. Procédé selon la revendication 9 et la revendication 14 et la revendication 15, **caractérisé en ce que** la grandeur opérationnelle (M) est le couple (M) du groupe propulseur (12) pendant au moins l'une des phases et la grandeur opérationnelle (N) est la vitesse de rotation (N) du groupe propulseur (12) pendant au moine l'une des phases.

16. Procédé selon la revendication 15, **caractérisé en ce que** la grandeur opérationnelle (N) n'est la vitesse de rotation (N) du groupe propulseur (12) que dans une seule phase, phase dans laquelle le couple (M) du groupe propulseur (12) atteint la zone d'uns valeur minimale.

17. Procédé selon l'une des revendications 1 à 16, **caractérisé en ce que** l'évolution prévisionnelle (M_{prad}, N_{prad}) et, le cas échéant, l'au moins une valeur de consigne (S) sont générées dans une zone de commande (36) associée à la boîte de transmission automatique (20) et sont transmises à une zone de commande (34) associée au groupe propulseur (12) pour commander le groupe propulseur (12).

18. Système propulseur, notamment pour un véhicule automobile, comprenant
- un groupe propulseur (12),
- une boîte de transmission automatisée (20),
- un mécanisme d'embrayage (16) automatisé réalisant à volonté une liaison de transmission de couple entre le groupe propulseur (12) et la boîte de transmission automatisée (20),
- une première zone de commande (34) pour commander le groupe propulseur (12),
- une deuxième zone de commande (36) pour commander la boîte de transmission automatisée (20) et, le cas échéant, le mécanisme d'embrayage automatisé (16),
**caractérisé en ce que**, lors de l'exécution d'une procédure, notamment un processus de changement de rapport, la deuxième zone de commande (36) pré-attribue, pendant au moine un intervalle de temps (t₁ - t₅) de la procédure à exécuter, une évolution prévisionnelle (M_{prad}, N_{prad}) pour une grandeur opérationnelle (M, N) caractérisant le fonctionnement du groupe propulseur (12) et que la première zone de commande (34) commande le groupe propulseur (12) de manière à régler la grandeur opérationnelle (M, N) en se basant sur l'évolution prévisionnelle (M_{prad}, N_{prad}), en option en relation avec l'une des caractéristiques des revendications 1 à 17.

19. Système propulseur selon la revendication 18, **caractérisé en ce que** la deuxième zone de commande (36), pendant l'exécution de la procédure, notamment le processus de changement de rapport, détermine en plus au moins une valeur de consigne (S) de la grandeur opérationnelle (M, N) et que la première zone de commande (34) commande en plus le groupe propulseur (12) en se basant sur l'au moins une valeur de consigne (S) s'il existe un écart entre celle-ci et une valeur prévisionnelle correspondante de l'évolution prévisionnelle (M_{prad}, N_{prad}).
